# EUROPEAN PATENT APPLICATION

(11) **EP 2 716 430 A1**
(43) Date of publication of application: **09.04.2014**
(21) Application number: 12789834.4
(22) Date of filing: 21.05.2012
(51) Int. Cl.: B29C 49/06, B29C 45/27, B65D 1/00, B65D 1/02, B65D 1/08, B65D 23/00

(54) **PREFORM, SYNTHETIC-RESIN CONTAINER WITH HANGING ATTACHMENT, AND METHOD FOR FORMING CONTAINER WITH HANGING ATTACHMENT**

(30) Priority: 24.05.2011 JP 2011115937
(71) Applicant: Nihon Yamamura Glass Co., Ltd., Amagasaki-shi, Hyogo 660-8580 (JP)
(72) Inventor: ISHIHARA, Osamu, Yaizu-shi Shizuoka 421-0204 (JP); KAWAMURA, Nobuo, Amagasaki-shi Hyogo 660-8580 (JP); KOJIMA, Atsushi, Amagasaki-shi Hyogo 660-8580 (JP)
(74) Representative: Barth, Stephan Manuel
(86) International application number: PCT/JP2012/062896
(87) International publication number: WO 2012/161150

(57) **Abstract**

Provided is a preform, a synthetic resin container with a hanging attachment, and a method for molding a container with a hanging attachment in which it is difficult to produce molding defects and there are a few restrictions on a shape of a preform main body. A preform 20 includes a bottomed-cylindrical preform main body 21 which becomes a container main body 2 and a hanging attachment 4 which is integrally formed with this preform main body 21. An infusion bottle 1 is obtained by blow-molding the preform main body 21. The hanging attachment 4 has a joining part 17 which joins a hanging attachment main body 16 to the preform main body 21. By narrowly forming the width of this joining part 17, an impact on stretching of the preform main body 21 is reduced at the time of the blow molding.

## Description

### TECHNICAL FIELD

The present invention relates to a synthetic resin container with a hanging attachment for accommodating various types of liquid contents, a preform for the synthetic resin container with a hanging attachment, and a method for forming a container with a hanging attachment using this preform.

### BACKGROUND ART

As a container to be used for administering an infusion containing a drug or the like to a patient, an infusion container (e.g., an infusion bottle) which accommodates an infusion has been widely available. A synthetic resin container with a hanging attachment which includes a container main body accommodating an infusion and a hanging attachment joined to this container main body and formed with a hanging hole, through which a hook passes, is known as such container. For example, Patent Document 1 discloses a container with a hanging attachment in which a hanging attachment is separated from a container main body and the hanging attachment is joined to the container main body by fitting a hole portion of a base part of this hanging attachment into a disc part of the container main body. In this container with a hanging attachment, the hanging attachment is molded separately from the container main body and is joined to the container main body through the above-described joining structure, whereby an infusion container is manufactured. Accordingly, production efficiency is low and production costs increase.

Patent Document 2 and Patent Document 3 disclose a container with a hanging attachment in which a hinge portion serving as a joining part and a hanging attachment are integrally formed with a container main body. Since the container main body and the hanging attachment are integrally formed in this way, it is not necessary to mold the hanging attachment separately from the container main body and does not require an effort to join the hanging attachment to the container main body through the joining structure as described above. Consequently, production time is reduced and production costs can be kept low.

### PRIOR ART DOCUMENTS

### PATENT DOCUMENTS

- Patent Document 1:: JP 3467300 B1
- Patent Document 2:: JP H4-76710 B
- Patent Document 3:: JP H6-28469 Y2

### SUMMARY OF THE INVENTION

### PROBLEMS TO BE SOLVED BY THE INVENTION

In Patent Document 2, the joining part which joins the container main body and the hanging attachment is formed in the same width as the hanging attachment, and in Patent Document 3, the joining part is formed wider than the hanging attachment. The container with a hanging attachment in each of these patent documents is molded by molding a preform in which the hanging attachment is integrally formed with a preform main body and blow-molding this preform. When the preform is blow-molded, a shape of the joining part changes little and only the preform main body is stretched. At this time, due to an impact of the joining part which is wider than the hanging attachment, there are problems such that it is difficult to stretch a portion of the preform main body and easier to produce molding defects. Further, due to the presence of the wide joining part, there is also a drawback in that a shape of the preform main body is limited.

Therefore, in consideration of the above-described problems of the conventional art, it is an object of the present invention to provide a preform, a synthetic resin container with a hanging attachment, and a method for molding a synthetic resin container with a hanging attachment in which it is difficult to produce molding defects and there are a few restrictions on a shape of a preform main body.

### MEANS FOR SOLVING THE PROBLEMS

In order to achieve the above-described object, the following technological measures are taken.

Namely, a preform of the present invention includes a bottomed-cylindrical preform main body which is molded into a container main body of a container with a hanging attachment by blow molding, a hanging attachment main body which is joined to the preform main body and has a hanging hole for hanging the container with a hanging attachment, and a joining part which joins the hanging attachment main body to the preform main body and is formed narrowly in the width so as to reduce an impact on stretching of the preform main body at the time of the blow molding.

According to the above-described preform of the present invention, since the joining part which joins the hanging attachment main body to the preform main body is narrow in the width and the impact on the stretching of the preform main body is reduced at the time of the blow molding, it is easier to stretch the preform main body (e.g., a bottom portion of the preform main body). In this way, it can be difficult to produce molding defects. Moreover, since the joining part which joins the hanging attachment main body to the preform main body is narrow in the width, the bottom portion, for example, of the preform main body to which the hanging attachment is attached can be thinner, restrictions on a shape of the preform main body can be fewer, and the preform main body can be lighter.

The shape of the joining part includes, for example, the one whose width gradually narrows from the hanging attachment main body toward the preform main body. In this case, since the width of the joining part is narrow on the preform main body side and wide on the hanging attachment main body side, strength of the joining part can be kept while the impact on the stretching of the preform main body is limited as small as possible.

It is preferable that the joining part has a folding portion which is easily bendable and raises and lowers the hanging attachment main body. In this case, since the hanging attachment main body can be in a lowered state, convenience at the time of conveying or the like of the container with a hanging attachment can be improved without projecting the hanging attachment from the container with a hanging attachment, which is a molded product.

It is preferable that the joining part is formed to have a cross-section area which can obtain a small flow resistance of a molten resin passing through a portion of a preform mold corresponding to the joining part. In this case, since the molten resin passes through the portion of the preform mold corresponding to the joining part of the hanging attachment with the small flow resistance, the molten resin is smoothly supplied to the entire preform mold and the molding defects can be reduced. In this way, productivity of the container with a hanging attachment can be improved.

It is preferable that a gate part having a size corresponding to a gate which supplies the molten resin to the preform mold is formed at the hanging attachment main body. In this case, since the molten resin smoothly flows into the preform mold, the molding defects can be reduced.

A synthetic resin container with a hanging attachment of the present invention includes a container main body which is molded by blow-molding a bottomed cylindrical preform main body, a hanging attachment main body which is joined to the container main body and has a hanging hole for hanging the container with a hanging attachment, and a joining part which joins the hanging attachment main body to the container main body and is formed narrowly in the width so as to reduce an impact on stretching of the preform main body at the time of the blow molding.

According to the above-described synthetic resin container with a hanging attachment of the present invention, since the joining part which joins the hanging attachment main body to the container main body, which is molded from the preform main body, is narrow in the width and the impact on the stretching of the preform main body is reduced at the time of the blow molding, it is easier to stretch the preform main body (e.g., a bottom portion of the preform main body) . In this way, it can be difficult to produce molding defects. Moreover, since the joining part which joins the hanging attachment main body to the container main body molded from the preform main body is narrow in the width, the bottom portion, for example, of the preform main body to which the hanging attachment is attached can be thinner, restrictions on a shape of the preform main body can be fewer, and the preform main body can be lighter.

The shape of the joining part includes, for example, the one whose width gradually narrows from the hanging attachment main body toward the container main body. In this case, since the width of the joining part is narrow on the container main body side and wide on the hanging attachment main body side, strength of the joining part can be kept while the impact on the stretching of the preform main body is limited as small as possible.

It is preferable that the joining part has a folding portion which is easily bendable and raises and lowers the hanging attachment main body. In this case, since the hanging attachment main body can be in a lowered state, convenience at the time of conveying or the like of the container with a hanging attachment can be improved without projecting the hanging attachment from the container with a hanging attachment, which is a molded product.

It is preferable that the joining part is formed to have a cross-section area which can obtain a small flow resistance of a molten resin passing through a portion of a preform mold corresponding to the joining part. In this case, since the molten resin passes through the portion of the preform mold corresponding to the joining part of the hanging attachment with the small flow resistance, the molten resin is smoothly supplied to the entire preform mold and the molding defects can be reduced. In this way, productivity of the container with a hanging attachment can be improved.

It is preferable that a gate part having a size corresponding to a gate which supplies the molten resin to the preform mold is formed at the hanging attachment main body. In this case, since the molten resin smoothly flows into the preform mold, the molding defects can be reduced.

A method for molding a container with a hanging attachment of the present invention, includes steps of molding a preform in which a hanging attachment is integrally formed with a preform main body and a joining part which joins the hanging attachment to the preform main body is formed narrowly in the width so as to reduce an impact on stretching of the preform main body when blow molding, and obtaining a container with a hanging attachment by blow-molding the preform.

According to the above-described method for molding a container with a hanging attachment of the present invention, since the joining part which joins the hanging attachment to the preform main body is narrow in the width, the impact on the stretching of the preform main body is reduced when the preform is blow-molded. As a result, it is easier to stretch the preform main body (e.g., a bottom portion of the preform main body) and can be difficult to produce molding defects. Moreover, since the joining part which joins the hanging attachment to the preform main body is narrow in the width, the bottom portion, for example, of the preform main body to which the hanging attachment is attached can be thinner, restrictions on a shape of the preform main body can be fewer, and the preform main body can be lighter.

### EFFECTS OF THE INVENTION

As described above, according to the present invention, since it is easier to stretch the preform main body, it can be difficult to produce molding defects. Further, since the width of the joining part of the hanging attachment is narrow, restrictions on a shape of the preform main body can be fewer.

### BRIEF DESCRIPTION OF THE DRAWINGS

Fig. 1(a) is a front view of an infusion bottle according to a first embodiment of the present invention, and Fig. 1(b) is a bottom view of the infusion bottle.
Fig. 2 is a side view of the infusion bottle.
Fig. 3 is a cross-sectional view when a preform is molded (a part other than a supplied molten resin is not hatched).
Fig. 4 is a front view of the preform of the infusion bottle.
Fig. 5 is a perspective view of a hanging attachment formed at a preform main body and the vicinity thereof.
Fig. 6 is a cross-sectional view when the preform is blow-molded.
Fig. 7 is a bottom view of an infusion bottle according to a second embodiment of the present invention.
Fig. 8 is a perspective view showing a modified example of a bottom portion of an infusion bottle.

### EMBODIMENTS OF THE INVENTION

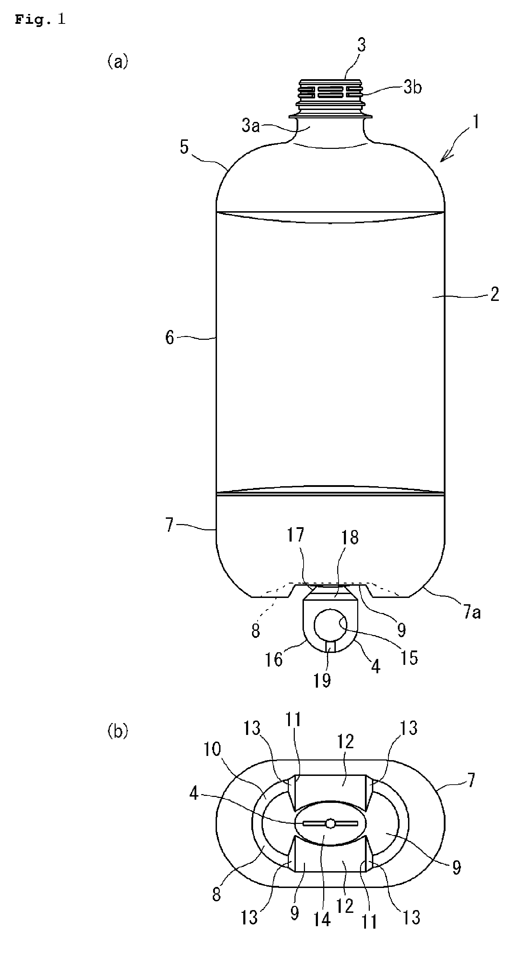

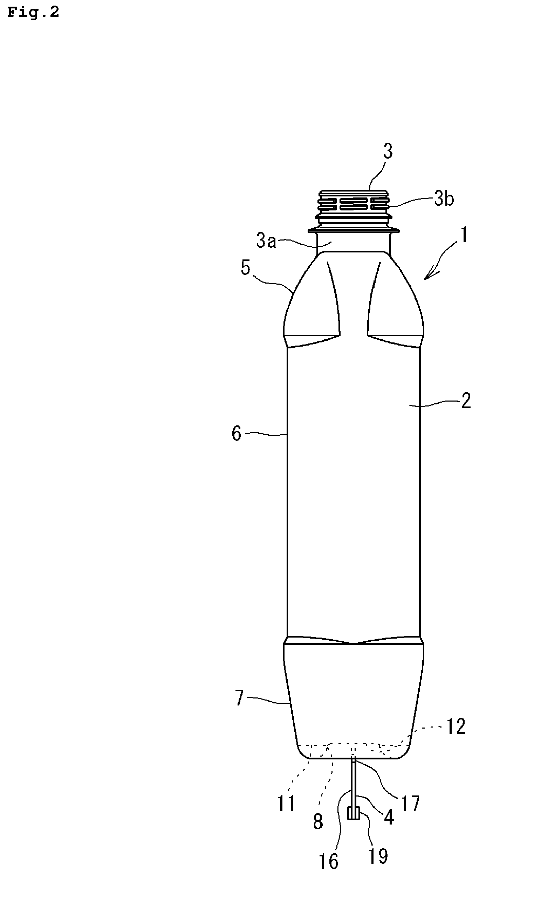

Referring to the accompanying drawings, an embodiment of the present invention will be described below. Fig. 1(a) is a front view of an infusion bottle (a synthetic resin container with a hanging attachment) 1 according to a first embodiment of the present invention, Fig. 1(b) is a bottom view of the infusion bottle 1, and Fig. 2 is a side view of the infusion bottle 1. It should be noted that in the following description a direction corresponding to an up and down direction in Fig. 1 is referred to simply as "up and down direction", a direction corresponding to a right and left direction in the drawing is referred to simply as "right and left direction", and a direction corresponding to a front and rear direction in the drawing is referred to simply as "front and rear direction". The infusion bottle 1 of the present embodiment accommodates an infusion containing a drug or the like. The infusion bottle 1 is configured with a container main body 2 serving as an accommodating portion for the infusion, a mouth portion 3 formed into a cylindrical shape at an upper end of the container main body 2, and a hanging attachment 4 integrally formed with the container main body 2.

A cylindrical main body 3a is formed at the mouth portion 3 so as to have substantially the same diameter from an upper end to a lower end thereof. A male screw 3b is formed at the main body 3a. By providing an unillustrated cap at the mouth portion 3, the container main body 2 is sealed. The container main body 2 is formed by a shoulder portion 5 which constitutes an upper portion of the container main body 2, a cylindrical portion 6 which is horizontally long in cross-section and constitutes a center of the container main body 2 in the up and down direction, and a bottom portion 7 which constitutes a lower portion of the container main body 2.

A concave portion 8 which is horizontally long and recessed inward is formed at a lower end 7a of the bottom portion 7. This concave portion 8 is formed by a planar-shaped bottom plane surface portion 9 which constitutes a central portion side thereof and a bottom inclined surface portion 10 which constitutes a circumference of this bottom plane surface portion 9. A notched groove portion 11 is formed at the bottom portion 7 in the front and rear direction. A portion of this groove portion 11 corresponding to the above-described concave portion 8 is configured with planer-shaped groove plane surface portions 12, 12 which are separated into front and rear and groove inclined surface portions 13, 13 which are on the right and left sides of the each groove plane surface portion 12. A part of the bottom plane surface portion 9 which is held between the front and rear groove plane surface portions 12, 12 and divided into an elliptical shape becomes a main body joining portion 14 at which the hanging attachment 4 is provided.

The hanging attachment 4 is plate-shaped on the whole and provided substantially in the center of the above-described main body joining portion 14 in such a way that a widthwise direction thereof corresponds to the right and left direction of the container main body 2. The hanging attachment 4 is configured with a hanging attachment main body 16 formed with a hanging hole 15, through which an unillustrated hook passes, and a joining part 17 which joins the hanging attachment main body 16 to the main body joining portion 14.

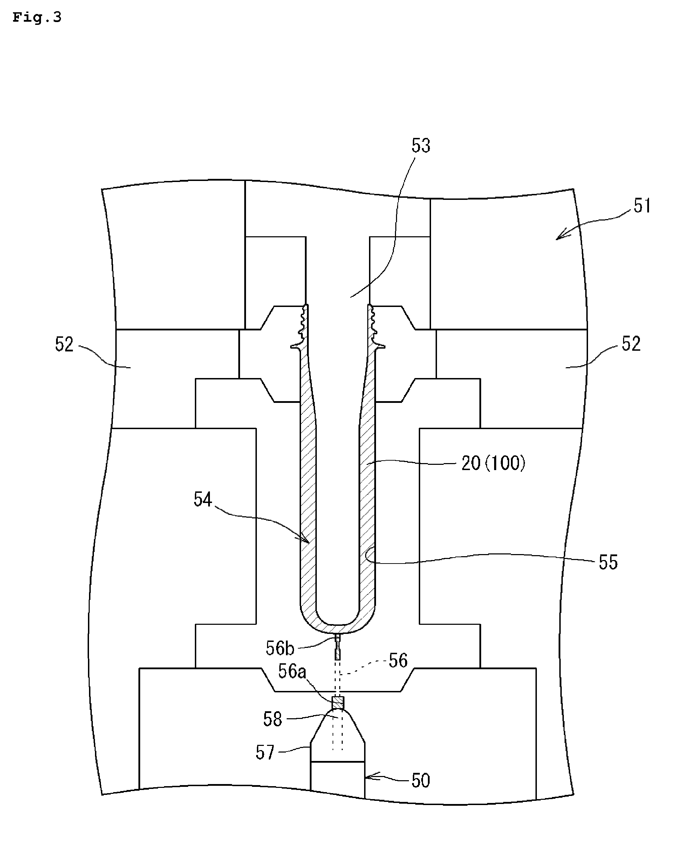

A method for molding the above-described infusion bottle 1 is described as a method for molding the container with a hanging attachment. The infusion bottle 1 is molded according to a biaxial stretch blow molding method formed by a preform molding process and a blow molding process. Fig. 3 is a cross-sectional view when a preform 20 is molded. In the preform molding process, the unstretched preform 20, which is a preform body, is molded from a raw resin by a preform molding apparatus. In the blow molding process, the obtained preform 20 is blow-molded and biaxially stretched by a blow molding apparatus, thereby forming the infusion bottle 1.

First, the preform 20 is injection-molded in the preform molding process. It should be noted that a part other than a supplied molten resin is not hatched in the drawing. A preform mold 51 provided at the preform molding apparatus is mainly configured with first and second mold groups 52, 52 divided into right and left and a core mold 53. A cavity 54 which molds the preform 20 is configured with these first and second mold groups 52, 52 and the core mold 53. The cavity 54 is divided into a first cavity 55 which molds the container main body 2 and a second cavity 56 which leads to the first cavity 55 and molds the hanging attachment 4. A temperature of the first and second mold groups 52, 52 is set to less than or equal to a glass transition point of the raw resin. The first and second mold groups 52, 52 are closed so as to form the above-described first and second cavities 55 and 56. Thereafter, a nozzle 57 of an injection molding machine 50 is butted against a gate portion 56a formed at a lower portion of the second cavity 56 and a molten resin 100 is supplied to the second cavity 56 and the first cavity 55 through the nozzle 57.

The molten resin 100 supplied to the first and second cavities 55 and 56 is rapidly cooled and kept cooled for an amount of time required, thereby forming the preform 20. The first and second mold groups 52, 52 and the core mold 53 are opened, and the preform 20 is demolded and transferred to the blow molding process.

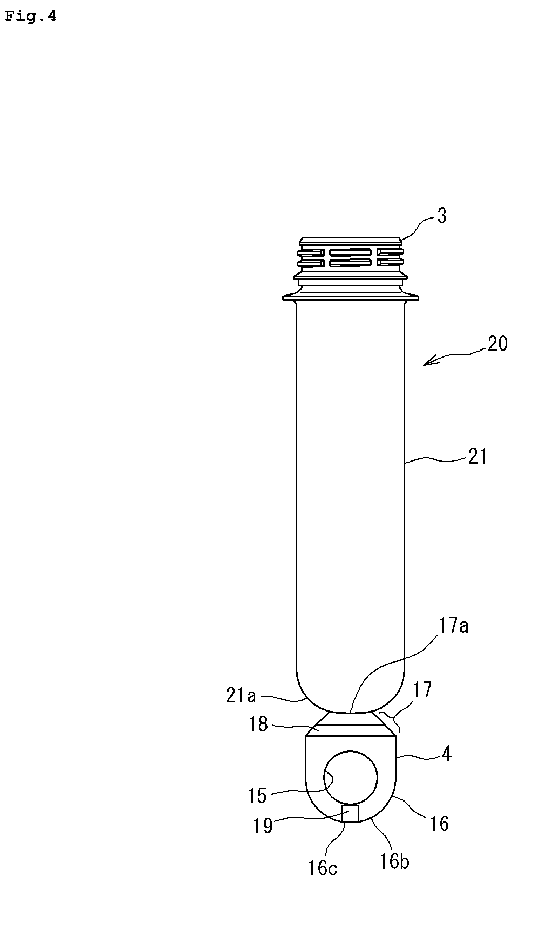

Fig. 4 is a front view of the preform 20. The preform 20 is formed by a preform main body 21 having a bottomed-cylindrical shape with a predetermined size, a mouth portion 3 which is formed at an upper end of the preform main body 21, and a hanging attachment 4 which is integrally formed with the preform main body 21 at a lower end thereof. In the subsequent blow molding process, a part of the preform main body 21 is biaxially stretched and molded into the container main body 2 of the infusion bottle 1. A bottom part 21a of the preform main body 21 is formed into a nearly semispherical shape and the hanging attachment 4 is integrally formed with a tip of the bottom part 21a. A shape and size of the hanging attachment 4 of the preform 20 does not change in the blow molding process and the hanging attachment 4 becomes the hanging attachment 4 of the infusion bottle 1 without any change.

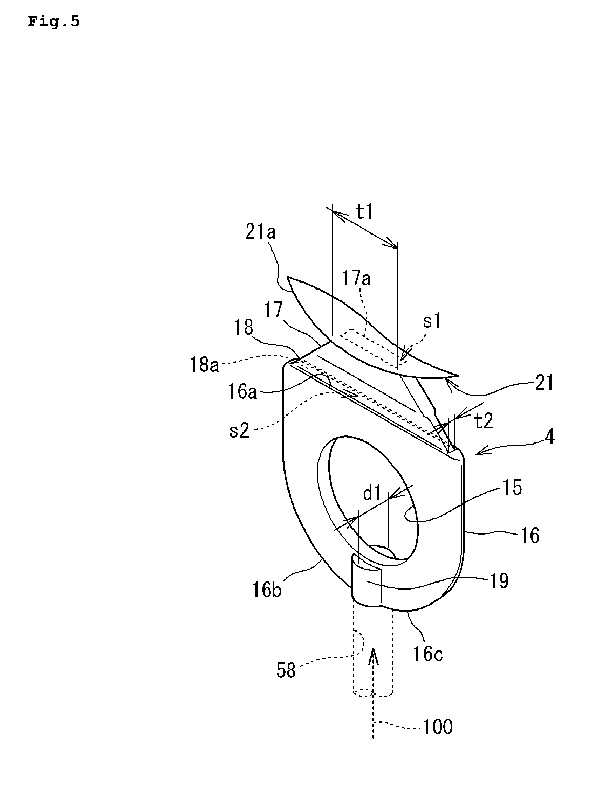

Fig. 5 is a perspective view of the hanging attachment 4 formed at the preform main body 21 and the vicinity thereof. As described above, the hanging attachment 4 is configured with the hanging attachment main body 16 and the joining part 17. After the blow molding, a part of the bottom part 21a of the preform main body 21 becomes the main body joining portion 14 of the bottom portion 7 of the container main body 2, to which the hanging attachment 4 is integrally joined (see Fig. 1(b)). A hanging hole 15 is formed into a substantially circular shape roughly in the center of the hanging attachment main body 16. An upper end 16a of the hanging attachment main body 16 on the preform main body 21 side is wide linear. A part of the hanging attachment main body 16 from the upper end 16a to a lower part 16b thereof is formed in the same width and the lower part 16b tapers toward a tip 16c.

The width of the joining part 17 gradually narrows from the upper end 16a of the hanging attachment main body 16 toward the preform main body 21 side and is formed narrower than the hanging attachment main body 16 on the whole. A width t1 of an end portion 17a of the joining part 17 on the preform main body 21 side is 7.5 mm and is smaller than a conventional example. The joining part 17 has a folding portion 18 which is formed at the joining part 17 on the hanging attachment main body 16 side and has a width t2 smaller than the hanging attachment main body 16. It should be noted that the thickness t2 of the folding portion 18 is preferably 0.3 to 1.0 mm. This is because the thickness of this range makes it easy to bend and difficult to break the folding portion 18. The width of the folding portion 18 gradually narrows from the hanging attachment main body 16 side toward the preform main body 21 side. This folding portion 18 is easily bendable and the hanging attachment main body 16 can be raised and lowered by the folding portion 18 with respect to the preform main body 21 (the container main body 2).

The joining part 17 except the above-described folding portion 18 has a thickness equal to or larger than the hanging attachment main body 16. The cross sections of the end portion 17a of the joining part 17 on the preform main body 21 side and the cross section of an end portion 18a of the folding portion 18 on the hanging attachment main body 16 side are quadrangular-shaped. In the present embodiment, a cross-section area s1 of the end portion 17a of the joining part 17 on the preform main body 21 side is 0.150 cm² and a cross-section area s2 of the end portion 18a of the folding portion 18 on the hanging attachment main body 16 side is 0.144 cm².

Namely, a joining portion 56b (see Fig. 3) of the second cavity 56 in the above-described first and second mold groups 52, 52 corresponding to the joining part 17 has an inside dimension which is the same cross-section area as the above-described cross-section area s1 and, when the preform 20 is molded, can obtain a small flow resistance of the molten resin passing through the joining portion 56b. It should be noted that the cross-section area s1 of the end portion 17a of the joining part 17 on the preform main body 21 side is preferably 0.7 to 2.0 times the cross-section area s2 of the end portion 18a of the folding portion 18 on the hanging attachment main body 16 side. This is because if this cross-section area s1 is less than 0.7 times the cross-section area s2, it is difficult to obtain the small flow resistance while if the cross-section area s1 is greater than 2. 0 times the cross-section area s2, the width of the end portion 17a becomes wide.

Further, a gate part 19 which has a circular cross section and rises from the hanging attachment main body 16 in a thickness direction thereof is formed at the tip 16c of the hanging attachment main body 16. The gate part 19 has a diameter dimension d1 following the gate portion 56a formed at the lower portion of the second cavity 56 (see Fig. 3). Namely, the gate portion 56a formed at the lower portion of the second cavity 56 has an inner diameter dimension equal to or larger than the diameter dimension d1. This gate portion 56a serves as an entrance where the molten resin 100 is supplied to the first and second cavities 55 and 56, and the inner diameter dimension of the gate portion 56a has a size corresponding to a gate 58 which pushes out the molten resin 100 at the time of molding the preform 20.

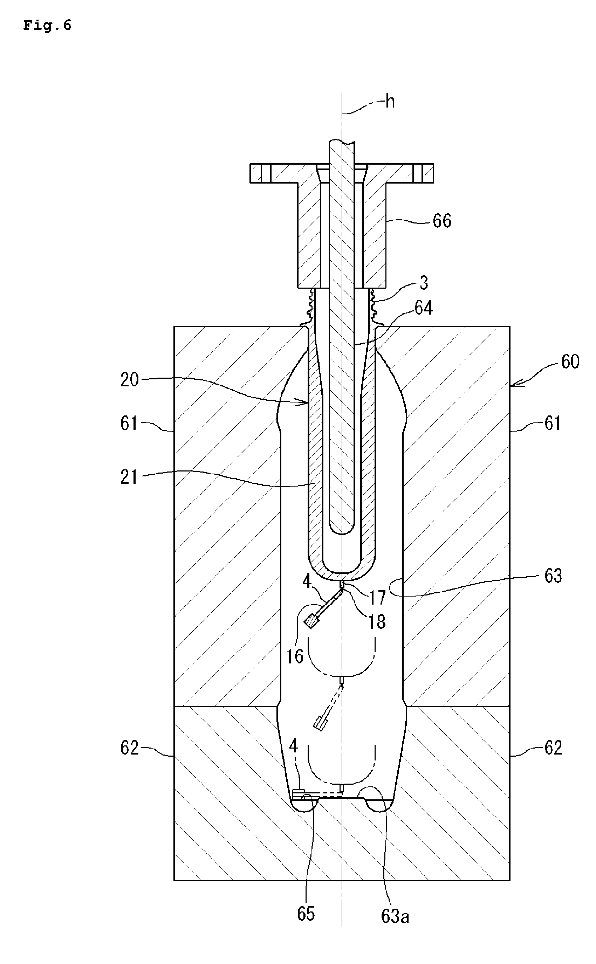

Fig. 6 is a cross-sectional view when the preform main body 21 is blow-molded. A blow mold 60 provided in the molding apparatus is mainly configured with halved first and second upper molds 61, 61 located on an upper side thereof and halved first and second lower molds 62, 62. A blow cavity 63 which molds the infusion bottle 1 is configured with these first and second upper molds 61, 61 and first and second lower molds 62, 62. First, the first and second upper molds 61, 61 and the first and second lower molds 62, 62 are attached to the preform 20 in such a manner that the a portion of the obtained preform 20 directly below the mouth portion 3 is held by the first and second upper molds 61, 61. Accordingly, the blow cavity 63 is configured. A blow nozzle 66 is abutted on the mouth portion 3 of the preform 20 and a stretch rod 64 is inserted into the preform 20. Then, in a state where the preform main body 21 is heated to a predetermined temperature, the stretch rod 64 is stretched downward in an axial direction (downward direction in Fig. 6). In this way, the preform main body 21 is stretched downward in the axial direction.

On the other hand, by introducing a gas from between the stretch rod 64 and the blow nozzle 66 and blowing the preform main body 21 by this gas, the preform main body 21 is stretched in a radial direction (a right and left direction or the like in Fig. 6). With the above-described operations, the preform main body 21 is biaxially stretched and the infusion bottle 1 of the present embodiment is molded according to a shape of the blow cavity 63. The biaxially stretched preform main body 21 is cooled, and thereafter, the first and second upper molds 61, 61 and the first and second lower molds 62, 62 are opened, and the infusion bottle 1, which is a molded product, is removed. Regarding the joining part 17 of the hanging attachment 4 integrally formed with the bottom part 21a of the preform main body 21, conventionally, since the width of this joining part is wide, the bottom portion of the preform main body is prevented from stretching. However, in the present embodiment, since the width of the joining part 17 is narrow as described above, an impact of the joining part 17 on the stretching of the preform main body 21 is reduced at the time of blow molding.

When the preform 20 is blown in the blow molding process, as shown in Fig. 6, the hanging attachment 4 joined to the preform main body 21 gradually lowers downward along with the stretching of the preform main body 21 and abuts on a bottom surface 63a of the blow cavity 63. The hanging attachment 4 abutted on the bottom surface 63a of the blow cavity 63 is folded at the folding portion 18 and accommodated in a grooved portion 65 which forms the groove portion 11 of the bottom portion 7 of the infusion bottle 1 while the hanging attachment main body 16 is lowered in the right and left direction in Fig. 6.

It should be noted that in a stage before the preform 20 is blow-molded, the hanging attachment main body 16 is preferably inclined in such a manner that an angle θ between the hanging attachment main body 16 and a shaft center h of the preform main body 21 is 30° or more. This is because if the hanging attachment main body 16 is inclined beforehand, the hanging attachment main body 16 is smoothly lowered in the right and left direction and accommodated in the grooved portion 65. In order that the hanging attachment main body 16 may be inclined between the preform molding process and the blow molding process in this way, there is a method in which the preform 20 is heated, and thereafter is fold-processed by an unillustrated guide having a required shape and charged into the blow mold 60. In addition, there is a method in which the hanging attachment main body 16 is mechanically inclined by an apparatus for inclining the hanging attachment main body 16 with the preform 20 and the preform 20 is charged into the blow mold 60.

Namely, the method for molding a container with a hanging attachment can be realized in which the hanging attachment 4 is integrally formed with the preform main body 21, which becomes the container main body 2 of the infusion bottle 1, so that the hanging attachment 4 can be raised and lowered, the preform 20, in which the joining part 17 joining the hanging attachment 4 to the preform main body 21 is narrow in the width, is molded so as to reduce the impact on the stretching of the preform main body 21 at the time of blow molding, and the infusion bottle 1 (the synthetic resin container with a hanging attachment) can be obtained by blow-molding this preform 20. Further, the method for molding the container with a hanging attachment can be also realized in which blow molding of the preform 20 is started in the blow mold 60 having the grooved portion 65 which can accommodate the lowered hanging attachment 4 and the blow molding is completed in a state where the hanging attachment 4 is accommodated in the grooved portion 65.

According to the infusion bottle 1 and the preform 20 of the above-described present embodiment, the joining part 17 which joins the hanging attachment main body 16 to the preform main body 21 is narrow in the width and the impact on the stretching of the preform main body 21 is reduced at the time of the blow molding. Thus, it is easier to stretch the bottom part 21a of the preform main body 21. By so doing, it can be difficult to produce molding defects. Moreover, since the joining part 17 which joins the hanging attachment main body 16 to the preform main body 21 is narrow in the width, the bottom part 21a of the preform main body 21, to which the hanging attachment 4 is attached, can be thinner, restrictions on the shape of the preform main body 21 can be fewer, and the preform main body 21 can be lighter. Further, in addition to these effects, according to the aforementioned method for molding the container with a hanging attachment, the blow molding is completed in the state where the hanging attachment 4 is accommodated in the grooved portion 65 of the blow mold 60. Accordingly, after the blow molding, the infusion bottle 1 can be conveyed without carrying out a process or the like of accommodating the hanging attachment 4 in the groove portion 11 of the bottom portion 7 of the infusion bottle 1, and the production costs can be reduced.

The joining part 17 which joins the hanging attachment main body 16 to the preform main body 21 gradually narrows in the width from the hanging attachment main body 16 toward the preform main body 21, and the width of the joining part 17 is narrow on the preform main body 21 side and wide on the hanging attachment main body 16 side. Consequently, strength of the joining part 17 can be kept while the impact on the stretching of the preform main body 21 is limited as small as possible.

The joining part 17 has the folding portion 18 which is easily bendable and raises and lowers the hanging attachment main body 16 and can put the hanging attachment main body 16 in the lowered state. Accordingly, the conveyance or the like can be made without projecting the hanging attachment 4 downward from the infusion bottle 1 and convenience at the time of conveying or the like of the infusion bottle 1 can be improved.

The cross-section area s1 of the end portion 17a of the joining part 17 on the preform main body 21 side is 0.7 to 2.0 times the cross-section area s2 of the end portion 18a of the folding portion 18 on the hanging attachment main body 16 side. The molten resin 100 at the time of the preform molding passes through the joining portion 56b of the second cavity 56 corresponding to the joining part 17 with a small flow resistance. Thus, the molten resin is smoothly supplied to the entire cavity 54 of the preform mold 51 and the molding defects can be reduced. In this way, productivity of the infusion bottle 1 can be improved.

Since the gate part 19 having the size corresponding to the gate 58 which pushes out the molten resin 100 to the cavity 54 is formed at the tip 16c of the hanging attachment main body 16, the molten resin 100 smoothly flows into the cavity 54 and the molding defects can be reduced.

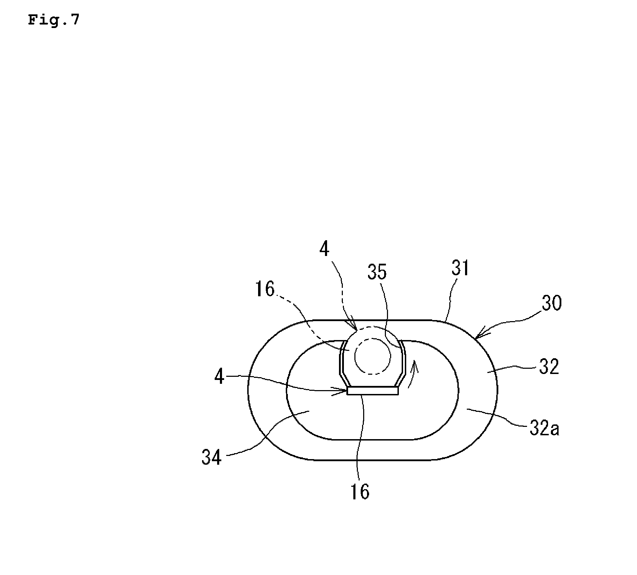

Fig. 7 is a bottom view of an infusion bottle (a synthetic resin container with a hanging attachment) 30 according to a second embodiment of the present invention. A difference between the infusion bottle 30 of the present embodiment and the infusion bottle 1 of the first embodiment is a shape of a bottom portion 32 of a container main body 31. Structures other than the shape of the bottom portion 32 are in common with the first embodiment. A horizontally-long bottom surface portion 34 is formed at a lower end 32a of the bottom portion 32. A hanging attachment 4 which is similar to the first embodiment is integrally joined to a substantially center of the bottom surface portion 34 so as to be foldable. An accommodating portion 35 accommodating a hanging attachment main body 16 of the hanging attachment 4 is formed at this bottom surface portion 34. This accommodating portion 35 is recessed inward from the bottom surface portion 34 so as to have a shape of the hanging attachment 4, and the hanging attachment main body 16 of the hanging attachment 4 is lowered and accommodated in the accommodating portion 35. By such accommodating portion 35, conveyance or the like of the infusion bottle 30 can be carried out without projecting the hanging attachment 4 downward from the infusion bottle 30 and convenience can be improved. Further, a shape of a bottom mold of an unillustrated blow mold corresponding to the bottom portion 32 is simplified and costs required for the mold can be reduced.

The preforms, the infusion bottles, and the methods for molding the container with a hanging attachment of the present embodiments disclosed above exemplify the preform, the synthetic resin container with a hanging attachment, and the method for molding a container with a hanging attachment of the present invention. Application of the present invention is not limited to an infusion container, such as an infusion bottle, and the present invention is applicable to any type of containers which can accommodate a liquid content.

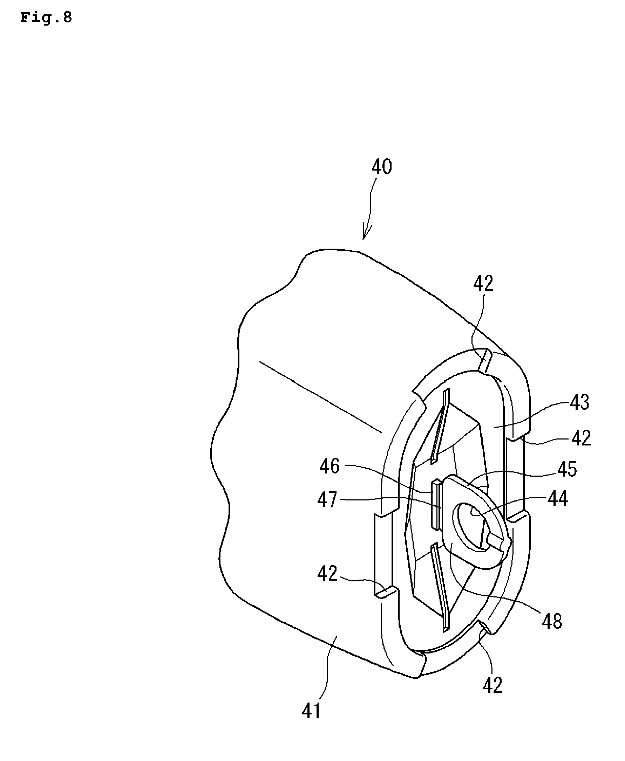

Moreover, the shape of the container, the shapes and dimensions of the parts, the resin to be formed, and the like can be appropriately changed, and other processes can be also included in the disclosed molding method. An example of the infusion bottle in another embodiment is shown in Fig. 8. A notched groove portion 42 leading in a right and left direction and a front and rear direction is formed at four front, rear, right and left locations of a bottom portion 41 of an infusion bottle 40 shown in the drawing. A bottom surface portion 43 is recessed inward and a hanging attachment 45 having a hanging hole 44 is integrally joined to a substantially center of the bottom surface portion 43.

The hanging attachment 45 is lowered and accommodated in the front and rear groove portions 42. Unlike the above-described embodiment, the width of a folding portion 47 of a joining part 46 of this hanging attachment 45 sharply narrows from a hanging attachment main body 48. The joining part 46 other than the folding portion 47 is rod-shaped in the right and left direction and the hanging attachment main body 48 is tightly joined to the bottom portion 41. In molding of the infusion bottle 40 shown in Fig. 8, the bottom surface portion 43 can be formed into an illustrated shape by providing an accommodating portion which accommodates the hanging attachment main body 48 in a lower mold 62 of a blow mold 60.

In the method for molding the container with a hanging attachment of the above-described embodiment, an unillustrated pressed mark which can be formed by pressing the hanging attachment main body 16 in the blow molding is left on the groove plane surface portion 12 of the groove portion 11 of the bottom portion 7 of the infusion bottle 1 (see Fig. 1(b)). However, if the accommodating portion accommodating the hanging attachment main body 16 is provided in the lower mold 62 of the blow mold 60 as described above, such pressed mark cannot be left. It should be noted that the scope of the present invention is illustrated by the claims and that meanings equivalent to the claims and all modifications thereof are included in the scope of the present invention.

### DESCRIPTION OF REFERENCE SIGNS

- 1, 30, 40: infusion bottle
- 2, 31: container main body
- 3: mouth portion
- 4, 45: hanging attachment
- 7, 32, 41: bottom portion
- 11, 42: groove portion
- 14: main body joining portion
- 15, 44: hanging hole
- 16, 48: hanging attachment main body
- 16a: upper end
- 16b: lower part
- 16c: tip
- 17, 46: joining part
- 17a: end portion
- 18, 47: folding portion
- 19: gate part
- 20: preform
- 21: preform main body
- 21a: bottom part
- 35: accommodating portion
- 50: injection molding machine
- 51: preform mold
- 54: cavity
- 56a: gate portion
- 56b: joining portion
- 58: gate
- 60: blow mold
- 61: upper mold
- 62: lower mold
- 63: blow cavity
- 65: grooved portion
- 100: molten resin

## Claims

1. A preform comprising:
a bottomed-cylindrical preform main body which is molded into a container main body of a container with a hanging attachment by blow-molding;
a hanging attachment main body which is joined to the preform main body and has a hanging hole for hanging the container with a hanging attachment; and
a joining part which joins the hanging attachment main body to the preform main body and is formed narrowly in a width so as to reduce an impact on stretching of the preform main body when blow molding.

2. The preform according to claim 1, wherein the width of the joining part gradually narrows from the hanging attachment main body toward the preform main body.

3. The preform according to claim 1 or 2, wherein the joining part has a folding portion which is easily bendable and raises and lowers the hanging attachment main body.

4. The preform according to any one of claims 1 to 3, wherein the joining part is formed to have a cross-section area which can obtain a small flow resistance of a molten resin passing through a portion of a preform mold corresponding to the joining part.

5. The preform according to any one of claims 1 to 4, wherein a gate part having a size corresponding to a gate which supplies the molten resin to the preform mold is formed at the hanging attachment main body.

6. A synthetic resin container with a hanging attachment comprising:
a container main body which is molded by blow-molding a bottomed cylindrical preform main body;
a hanging attachment main body which is joined to the container main body and has a hanging hole for hanging the container with a hanging attachment; and
a joining part which joins the hanging attachment main body to the container main body and is formed narrowly in a width so as to reduce an impact on stretching of the preform main body when blow molding.

7. The synthetic resin container with a hanging attachment according to claim 6, wherein the width of the joining part gradually narrows from the hanging attachment main body toward the container main body.

8. The synthetic resin container with a hanging attachment according to claim 6 or 7, wherein the joining part has a folding portion which is easily bendable and raises and lowers the hanging attachment main body.

9. The synthetic resin container with a hanging attachment according to any one of claims 6 to 8, wherein the joining part is formed to have a cross-section area which can obtain a small flow resistance of a molten resin passing through a portion of a preform mold corresponding to the joining part.

10. The synthetic resin container with a hanging attachment according to any one of claims 6 to 9, wherein a gate part having a size corresponding to a gate which supplies the molten resin to the preform mold is formed at the hanging attachment main body.

11. A method for molding a container with a hanging attachment, comprising steps of:
molding a preform in which a hanging attachment is integrally formed with a preform main body and a joining part which joins the hanging attachment to the preform main body is formed narrowly in a width so as to reduce an impact on stretching of the preform main body when blow molding; and
obtaining a container with a hanging attachment by blow-molding the preform.
